# EUROPEAN PATENT SPECIFICATION

(11) **EP 4 309 540 B1**
(45) Date of publication and mention of the grant of the patent: **20.08.2025**
(21) Application number: 22770291.7
(22) Date of filing: 01.03.2022
(51) Int. Cl.: A45B 25/14, A45B 25/16, A45B 25/22

(54) **ELECTRICALLY OPENED AND CLOSED SUNSHADE**
ELEKTRISCH ZU ÖFFNENDE UND SCHLIESSENDE SONNENBLENDE
PARASOL À OUVERTURE ET À FERMETURE ÉLECTRIQUES

(30) Priority: 19.03.2021 CN 202110295063
(43) Date of publication of application: 24.01.2024
(73) Proprietor: Phaeton Manufacturing LLC, Nantong, Jiangsu 226400 (CN)
(72) Inventor: LUO, Xiong, Nantong, Jiangsu 226400 (CN)
(74) Representative: Meyer-Dulheuer MD Legal Patentanwälte PartG mbB
(86) International application number: PCT/CN2022/078516
(87) International publication number: WO 2022/193936

(56) References cited:
- CN-A- 106 974 390
- CN-A- 111 568 004
- CN-A- 111 568 004
- CN-A- 112 914 214
- CN-U- 201 929 194
- CN-U- 205 072 247
- CN-U- 205 072 247
- CN-U- 214 802 882
- DE-U1- 20 115 822
- DE-U1- 20 115 822
- US-A1- 2014 182 639
- US-B2- 7 909 048

## Description

### BACKGROUND

### Technical Field

The present invention relates to a field of an umbrella, and in particular to an electrically-operated umbrella.

### Description of Related Art

As a kind of outdoor leisure item, umbrellas are widely applied in squares, beaches, parks, gardens or similar places to shield individuals from sun. The existing umbrella is generally composed of a column, a rod frame and a canopy, characterized in that the rod frame is connected to the top of the column, the column mainly plays a role in supporting the rod frame, and the canopy is connected to the rod frame. When the rod frame is unfolded, the canopy is also unfolded, so that the umbrella is unfolded. The umbrella used outdoor requires a large canopy. At present, most umbrellas are operated manually or unfolded/folded by mechanisms such as motor-driven gears or worm gears.

In the prior art, the manually-operated umbrellas are time-consuming and labor-intensive, and the umbrellas with motor-driven gears or worm gear mechanisms have higher requirements for part machining and are relatively high in cost. The maintenance cost is also high when the umbrellas are damaged. Therefore, it is necessary to design an umbrella which is electrically-operated, easy to operate, low in cost and safer.

After searching, a Chinese Patent CN205072251U (patent No: CN201520724492.9) disclosed an electrically-operated umbrella using solar energy, comprising a body composed of a column, rods connected to the handle and a canopy covered on the rods; a folding/unfolding mechanism for controlling the rods to be folded or unfolded is arranged inside the column; a control box is arranged on the top of the column, and a main control board is arranged in the control box. The umbrella further comprises a wind speed detection unit detachably assembled on one side of the control box; and, a detected signal of the wind speed detection unit is transmitted to a control module on the main control board. This umbrella is powered by solar energy and can distinguish, according to the output current of the solar panel, whether it is in daytime or at night so as to unfold the umbrella body in the daytime and fold the umbrella body at night. The fully automatic operation is very convenient, but the cost is high and it is difficult to popularize. Although it is disclosed that the umbrella has a folding/unfolding mechanism, the specific structure of the folding/unfolding mechanism has not been described. Document CN 205 072 247 U discloses an umbrella according to the preamble of claim 1.

### SUMMARY

A technical problem to be solved by the present invention is to provide an electrically-operated umbrella which is simple in structure, easy to operate and low in cost.

To solve the above object, the electrically-operated umbrella comprises a column; an upper tray; a lower tray; a plurality of long rods, each having a middle portion and an upper portion, each rotatably connected to the upper tray; a plurality of short rods having two ends; and an electric air pump. One end of each short rod is rotatably connected to the lower tray, the other end of each short rod is rotatably connected to the middle portion or the upper portion of the corresponding long rod. The column comprises an inner tube having a top and a bottom, and an outer tube having a top, a bottom and a lower portion, the outer tube is sleeved around the inner tube, the inner tube is capable of sliding up and down relative to the outer tube in a limited range of motion. A closed air chamber is defined between the bottom of the inner tube and the bottom or the lower portion of the outer tube. The upper tray is connected to the top of the inner tube, the lower tray is connected to the outer tube and sleeved around the outer tube. The electric air pump is disposed inside the inner tube to inflate or deflate the air chamber so as to drive the inner tube to slide up and down, and the upper tray is capable of sliding up and down with the inner tube relative to the outer tube and the lower tray, so as to drive the plurality of long rods and the plurality of short rods to rotate in order to fold or unfold the umbrella.

As an improvement, a piston movable with the inner tube is disposed at the bottom of the inner tube, a tube plug is disposed at the bottom of the outer tube or inside the lower portion of the outer tube, the closed air chamber inside the outer tube is defined between the piston and the tube plug; the electric air pump is located above the piston, the electric air pump has an air nozzle located at the bottom of the electric air pump, the air nozzle extends downward through the piston and communicates with the air chamber; when the umbrella frame is wholly unfolded, the electric air pump exhausts the air inside the air chamber, the piston moves downward with the inner tube relative to the outer tube to resist against the tube plug to maintain the unfolded umbrella frame, and the air chamber is a buffering area for an external force.

As an improvement, the piston is detachably connected to the bottom of the inner tube, and the tube plug is detachably connected to the outer tube.

Preferably, the piston has a vertical through hole at a middle portion of the piston for allowing the air nozzle to pass through, the piston has one or more radial connecting hole on a periphery of the piston, correspondingly, the inner tube has one or more threaded hole, the piston is connected to the inner tube through a bolt passing through the threaded hole and the corresponding connecting hole; the bottom of the piston extends out of the inner tube, and a first sealing ring is disposed between a periphery of the bottom of the piston and an inner wall of the outer tube.

Preferably, the tube plug has one or more radial connecting hole on a periphery of a lower portion of the tube plug, correspondingly, the outer tube has one or more threaded hole; the tube plug is connected to the outer tube through a bolt passing through the threaded hole and the corresponding connecting hole, and a second sealing ring is disposed between a periphery of an upper portion of the tube plug and the inner wall of the outer tube.

Preferably, a power module for supplying power to the electric air pump is disposed on the top of the inner tube at an upper end of the upper tray; the power module comprises a battery and a circuit board; and, the power module is electrically connected to the electric air pump in the inner tube through wires.

Preferably, the battery is a solar rechargeable battery, and the power module is equipped with a solar panel to charge the rechargeable battery.

Preferably, the circuit board may is a wireless control circuit, the umbrella is unfolded or folded by using a wireless device, and the wireless device comprises, but not limited to, a remote controller, a Bluetooth mobile phone, etc.

Finally, the lower tray is detachably connected to the outer tube and sleeved around the outer tube.

Compared with the prior art, the present invention has the following advantages. The column is composed of the outer tube and the inner tube, the upper tray is connected to the top of the inner tube , the lower tray is connected to the outer tube and sleeved around the outer tube, and the inner tube is driven by the pneumatic structure to slide up and down relative to the outer tube, so as to drive the upper tray to slide up and down relative to the lower tray and drive the plurality of long rods and the plurality of short rods to rotate in order to fold or unfold the umbrella. Since the closed air chamber inside the outer tube is defined between the piston and the tube plug, when the frame is subjected to an external force, for example, being blown by wind, the air chamber is a buffering area for the external force, thus prolonging the service life of the umbrella. The battery is a rechargeable battery with a solar panel, and the umbrella is controlled and operated by a wireless device, such as a remote controller or a Bluetooth mobile phone. The present invention is simple in structure, easy and quick to operate, free of lots of members, and low in cost. In addition, when the umbrella is in the unfolded state, the air chamber is a buffering area for the wind power. Thus, the service life of the umbrella is prolonged, umbrella becomes safer and more reliable in use, and the user experience is greatly improved, so that the product of the present invention is worth popularizing.

### BRIEF DESCRIPTION OF THE DRAWINGS

Fig. 1 is a front view of an electrically-operated umbrella according to an embodiment of the present invention;
Fig. 2 is a vertically sectional view of a part of Fig. 1;
Fig. 3 is a sectional view of a part of an inner tube and an outer tube when the umbrella is folded according to the embodiment of the present invention;
Fig. 4 is a sectional view of a part of the inner tube and the outer tube when the umbrella is unfolded according to the embodiment of the present invention.

### DESCRIPTION OF THE EMBODIMENTS

The present invention will be further described below in detail by embodiments with reference to the accompanying drawings.

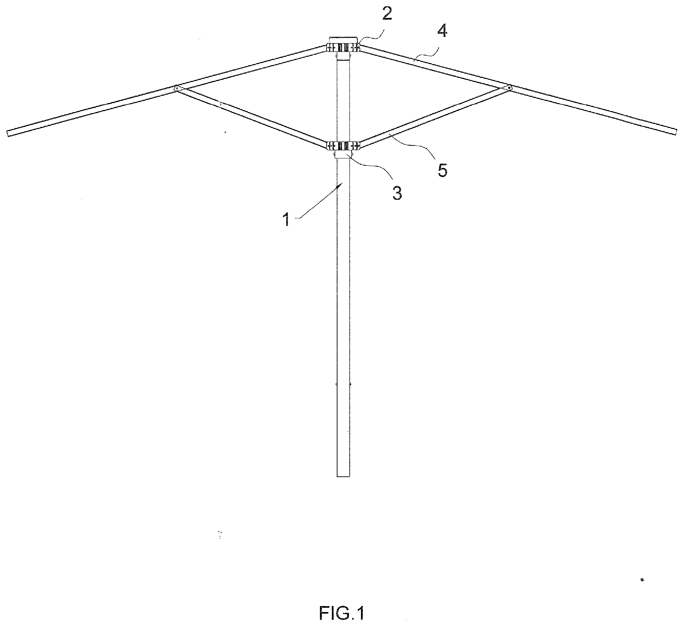

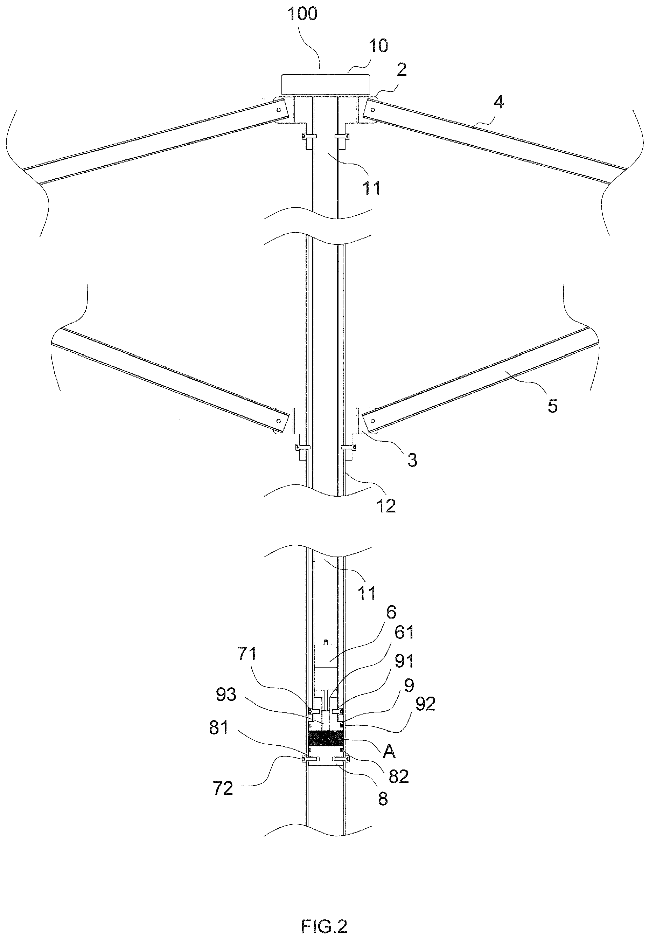

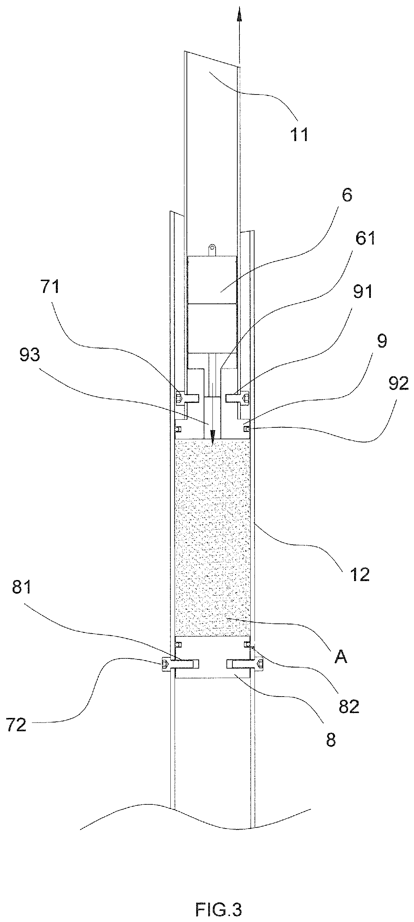

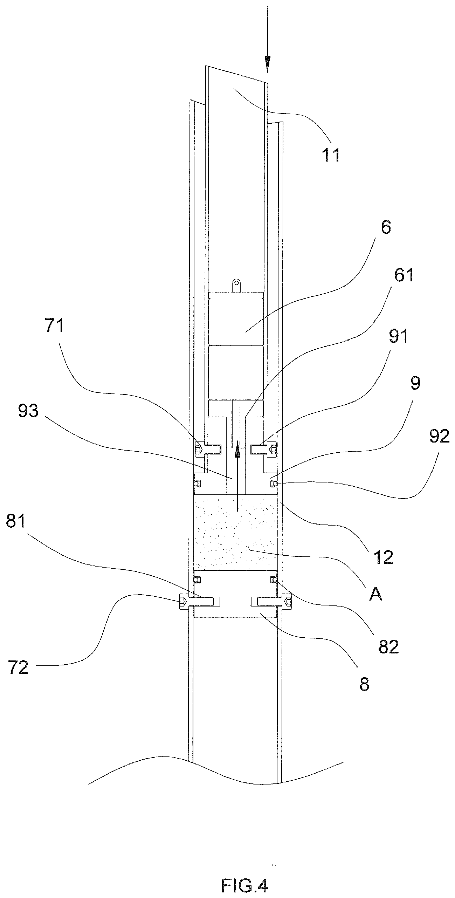

As shown in Figs. 1-4, the electrically-operated umbrella comprises an upper tray 2, a lower tray 3, a plurality of long rods 4, a plurality of short rods 5 having two ends, a column 1 and an electric air pump 6. Each long rod 4 has a middle portion and an upper portion and is rotatably connected to the upper tray 2. One end of each short rod 5 is rotatably connected to the lower tray 3, the other end of each short rod 5 is rotatably connected to the middle portion or the upper portion of the corresponding long rod 4, forming a umbrella frame. The column 1 comprises an inner tube 11 having a top and a bottom, and an outer tube 12 having a top, a bottom and a lower portion, the outer tube 12 is sleeved around the inner tube 11, the inner tube 11 is capable of sliding up and down relative to the outer tube 12 in a limited range of motion; a closed air chamber A is defined between the bottom of the inner tube 11 and the bottom or the lower portion of the outer tube 12. The upper tray 2 is fixedly connected to the top of the inner tube 11, the lower tray 3 is detachably connected to the outer tube 12 and sleeved around the outer tube 12. A electric air pump 6 is disposed inside the inner tube 11 to inflate or deflate the air chamber A so as to drive the inner tube 11 to slide up and down; and the upper tray 2 can slide up and down together with the inner tube 11 relative to the outer tube 12 and the lower tray 3, so as to drive the plurality of long rods 4 and the plurality of short rods 5 to rotate/move adaptively to perform a fold or unfold of the umbrella.

Specifically, a piston 9 movable with the inner tube 11 is detachably disposed at the bottom of the inner tube 11, a tube plug 8 is detachably disposed at the bottom of the outer tube 12 or inside the lower portion of the outer tube 12. The piston 9 has a vertical through hole 93 at a middle portion of the piston 9 for allowing the air nozzle 61 to pass through, the piston 9 has a plurality of radial connecting holes 91 on a periphery of the piston 9, correspondingly, the inner tube 11 has a plurality of threaded holes, the piston 9 is connected to the inner tube 11 through a plurality of bolts 71 each passing through the threaded hole and the corresponding connecting hole 91; the bottom of the piston 9 extends out of the inner tube 11, and a first sealing ring 92 is disposed between a periphery of the bottom of the piston 9 and an inner wall of the outer tube 12 so as to realize sealing. The tube plug 8 has a plurality of radial connecting holes 81 on a periphery of a lower portion of the tube plug 8, correspondingly, the outer tube 12 has a plurality of threaded holes; the tube plug 8 is connected to the outer tube 12 through a plurality of bolts 72 each passing through the threaded hole and the corresponding connecting hole 81, and a second sealing ring 82 is disposed between a periphery of an upper portion of the tube plug 8 and the inner wall of the outer tube 12 so as to realize sealing. Therefore, the closed air chamber A inside the outer tube 12 is defined between the piston 9 and the tube plug 8, when the umbrella frame is subjected to an external force, for example, the wind power, the air chamber A can be a buffering area for such an external force. The electric air pump 6 is located above the piston 9, the electric air pump 6 has an air nozzle 61 located at the bottom of the electric air pump 6, the air nozzle 61 extends downward through the piston 9 and communicates with the air chamber A. The air chamber A is inflated or deflated by the electric air pump 6.

A power module 100 for supplying power to the electric air pump 6 is disposed on the top of the inner tube 11 and the top of the upper tray 2, the power module 100 comprises a battery and a circuit board, and the power module 100 is electrically connected to the electric air pump 6 inside the inner tube 11 through wires. The battery is a solar rechargeable battery in this embodiment, and the power module 100 has a solar panel 10 to charge the rechargeable battery. The circuit board is a wireless control circuit, a wireless device can be used to achieve the folding or the unfolding of the umbrella, and the wireless device comprises, but is not limited to, a remote controller, a Bluetooth mobile phone, etc.

The specific operation will be described below.

The switch is operated to control the electric air pump 6 to rotate in a forward direction, so that air is inflated into the air chamber A, and the air pressure in the air chamber A continues to rise. When the air pressure in the air chamber A exceeds the atmospheric pressure, the piston 9 is subjected to an upward force to push the inner tube 11 to slide up. At this time, the upper tray 2 and the inner tube 11 move upward, finally the umbrella frame is folded. The switch is operated to control the electric air pump 6 to rotate in a reverse direction, accordingly air is deflated from the air chamber A, and the air pressure in the air chamber A continues to drop. When the air pressure in the air chamber A is less than the atmospheric pressure, the piston 9 is driven to slide downward together with the inner tube 11. At this time, the upper tray 2 and the inner tube 11 move downward together, thereby the umbrella frame is unfolded finally achieving the open of the umbrella. After the umbrella is wholly unfolded, the piston 9 is close to the tube plug 8, and the air pressure in the air chamber A is almost vacuum, so that the piston 9 is forced to be firmly close to the tube plug 8 and the unfolded state of the umbrella frame can be maintained. After the umbrella frame is unfolded and when the long rods 4 are subjected to an external force such as wind power, the long rods 4 tend to drive the upper tray 2 and the inner tube 11 to slide up and down. Since the gas in the air chamber A cannot flow when the electric air pump 6 is not started, the air chamber A cannot form a buffering area for an external force generated by the upward or downward sliding of the inner tube 11, thereby prolonging the service life of the umbrella.

## Claims

1. An electrically-operated umbrella, comprising:
a column (1);
an upper tray (2);
a lower tray (3);
a plurality of long rods (4), each having a middle portion and an upper portion, each rotatably connected to the upper tray;
a plurality of short rods (5) having two ends; and
an electric air pump (6); wherein
one end of each short rod is rotatably connected to the lower tray, the other end of each short rod is rotatably connected to the middle portion or the upper portion of the corresponding long rod;
the column comprises an inner tube (11) having a top and a bottom, and an outer tube (12) having a top, a bottom and a lower portion, the outer tube is sleeved around the inner tube, the inner tube is capable of sliding up and down relative to the outer tube in a limited range of motion;
a closed air chamber (A) is defined between the bottom of the inner tube and the bottom or the lower portion of the outer tube;
the upper tray is connected to the top of the inner tube, the lower tray is connected to the outer tube and sleeved around the outer tube;
and the upper tray is capable of sliding up and down with the inner tube relative to the outer tube and the lower tray, so as to drive the plurality of long rods and the plurality of short rods to rotate in order to fold or unfold the umbrella, **characterized in that** the electric air pump is disposed inside the inner tube to inflate or deflate the air chamber so as to drive the inner tube to slide up and down.

2. The electrically-operated umbrella according to claim 1, **characterized in that** a piston (9) movable with the inner tube is disposed at the bottom of the inner tube, a tube plug (8) is disposed at the bottom of the outer tube or inside the lower portion of the outer tube, the closed air chamber inside the outer tube is defined between the piston and the tube plug;
the electric air pump is located above the piston, the electric air pump has an air nozzle (61) located at the bottom of the electric air pump, the air nozzle extends downward through the piston and communicates with the air chamber;
when the umbrella frame is wholly unfolded, the electric air pump exhausts the air inside the air chamber, the piston moves downward with the inner tube relative to the outer tube to resist against the tube plug to maintain the unfolded umbrella frame, and the air chamber is a buffering area for an external force.

3. The electrically-operated umbrella according to claim 2, **characterized in that** the piston is detachably connected to the bottom of the inner tube, and the tube plug is detachably connected to the outer tube.

4. The electrically-operated umbrella according to claim 3, **characterized in that** the piston has a vertical through hole (93) at a middle portion of the piston for allowing the air nozzle to pass through, the piston has one or more radial connecting hole (91) on a periphery of the piston, correspondingly, the inner tube has one or more threaded hole, the piston is connected to the inner tube through a bolt (71) passing through the threaded hole and the corresponding connecting hole;
the bottom of the piston extends out of the inner tube, and a first sealing ring (92) is disposed between a periphery of the bottom of the piston and an inner wall of the outer tube.

5. The electrically-operated umbrella according to claim 4, **characterized in that** the tube plug has one or more radial connecting hole on a periphery of a lower portion of the tube plug, correspondingly, the outer tube has one or more threaded hole;
the tube plug is connected to the outer tube through a bolt (72) passing through the threaded hole and the corresponding connecting hole, and a second sealing ring is disposed between a periphery of an upper portion of the tube plug and the inner wall of the outer tube.

6. The electrically-operated umbrella according to any one of claims 1-5, **characterized in that** a power module (100) for supplying power to the electric air pump is disposed on the top of the inner tube at an upper end of the upper tray, the power module comprises a battery and a circuit board, and the power module is electrically connected to the electric air pump in the inner tube through wires.

7. The electrically-operated umbrella according to claim 6, **characterized in that** the battery is a solar rechargeable battery, and the power module is equipped with a solar panel (100) to charge the rechargeable battery.

8. The electrically-operated umbrella according to claim 6, **characterized in that** the circuit board is a wireless control circuit, the umbrella is unfolded or folded by using a wireless device, and the wireless device comprises, but is not limited to, a remote controller, a Bluetooth mobile phone, etc.

9. The electrically-operated umbrella according to claim 6, **characterized in that** the lower tray is detachably connected to the outer tube and sleeved around the outer tube.

## Patentansprüche

1. Elektrisch betriebener Schirm, umfassend:
eine Säule (1);
ein oberes Tablett (2);
eine untere Schale (3);
eine Vielzahl von langen Stangen (4), die jeweils einen mittleren Abschnitt und einen oberen Abschnitt aufweisen und jeweils drehbar mit der oberen Schale verbunden sind;
eine Vielzahl von kurzen Stäben (5) mit zwei Enden; und
eine elektrische Luftpumpe (6);
wobei
ein Ende jeder kurzen Stange drehbar mit dem unteren Boden verbunden ist, das andere Ende jeder kurzen Stange drehbar mit dem mittleren Abschnitt oder dem oberen Abschnitt der entsprechenden langen Stange verbunden ist;
die Säule ein inneres Rohr (11) mit einer Oberseite und einer Unterseite und ein äußeres Rohr (12) mit einer Oberseite, einer Unterseite und einem unteren Abschnitt umfasst, wobei das äußere Rohr um das innere Rohr herumgeführt ist und das innere Rohr in der Lage ist, relativ zu dem äußeren Rohr in einem begrenzten Bewegungsbereich auf und ab zu gleiten;
eine geschlossene Luftkammer (A) zwischen dem Boden des Innenrohrs und dem Boden oder dem unteren Teil des Außenrohrs definiert ist;
die obere Schale ist mit dem oberen Ende des inneren Rohrs verbunden, die untere Schale ist mit dem äußeren Rohr verbunden und um das äußere Rohr herumgeführt;
und die obere Schale in der Lage ist, mit dem inneren Rohr relativ zu dem äußeren Rohr und der unteren Schale nach oben und unten zu gleiten, um die Vielzahl von langen Stangen und die Vielzahl von kurzen Stangen in Drehung zu versetzen, um den Schirm zusammenzufalten oder zu entfalten,
**dadurch gekennzeichnet, dass** die elektrische Luftpumpe im Inneren des Innenrohrs angeordnet ist, um die Luftkammer aufzublasen oder zu entleeren, um das Innenrohr zum Auf- und Abgleiten anzutreiben.

2. Elektrisch betriebener Schirm nach Anspruch 1, **dadurch gekennzeichnet, dass** ein mit dem Innenrohr beweglicher Kolben (9) am Boden des Innenrohrs angeordnet ist, ein Rohrstopfen (8) am Boden des Außenrohrs oder im unteren Teil des Außenrohrs angeordnet ist, die geschlossene Luftkammer im Inneren des Außenrohrs zwischen dem Kolben und dem Rohrstopfen definiert ist;
die elektrische Luftpumpe ist oberhalb des Kolbens angeordnet, die elektrische Luftpumpe hat eine Luftdüse (61), die am Boden der elektrischen Luftpumpe angeordnet ist, die Luftdüse erstreckt sich nach unten durch den Kolben und steht mit der Luftkammer in Verbindung;
wenn der Schirmrahmen vollständig aufgeklappt ist, die elektrische Luftpumpe die Luft in der Luftkammer ausstößt, der Kolben sich mit dem inneren Rohr relativ zum äußeren Rohr nach unten bewegt, um gegen den Rohrstopfen Widerstand zu leisten, um den aufgeklappten Schirmrahmen aufrechtzuerhalten, und die Luftkammer ein Pufferbereich für eine externe Kraft ist.

3. Elektrisch betriebener Regenschirm nach Anspruch 2, **dadurch gekennzeichnet, dass** der Kolben abnehmbar mit dem Boden des Innenrohrs verbunden ist und der Rohrstopfen abnehmbar mit dem Außenrohr verbunden ist.

4. Elektrisch betriebener Schirm nach Anspruch 3, **dadurch gekennzeichnet, dass** der Kolben ein vertikales Durchgangsloch (93) in einem mittleren Abschnitt des Kolbens aufweist, um den Durchgang der Luftdüse zu ermöglichen, der Kolben ein oder mehrere radiale Verbindungslöcher (91) an einem Umfang des Kolbens aufweist, das Innenrohr dementsprechend ein oder mehrere Gewindelöcher aufweist, der Kolben mit dem Innenrohr durch einen Bolzen (71) verbunden ist, der durch das Gewindeloch und das entsprechende Verbindungsloch verläuft;
der Boden des Kolbens aus dem Innenrohr herausragt, und ein erster Dichtungsring (92) zwischen einem Umfang des Bodens des Kolbens und einer Innenwand des Außenrohrs angeordnet ist.

5. Elektrisch betätigter Schirm nach Anspruch 4, **dadurch gekennzeichnet, dass** der Rohrstopfen ein oder mehrere radiale Verbindungslöcher am Umfang eines unteren Abschnitts des Rohrstopfens aufweist, und dass das Außenrohr entsprechend ein oder mehrere Gewindelöcher aufweist;
der Rohrstopfen mit dem Außenrohr durch einen Bolzen (72) verbunden ist, der durch das Gewindeloch und das entsprechende Verbindungsloch verläuft, und ein zweiter Dichtungsring zwischen einem Umfang eines oberen Abschnitts des Rohrstopfens und der Innenwand des Außenrohrs angeordnet ist.

6. Elektrisch betriebener Regenschirm nach einem der Ansprüche 1 bis 5, **dadurch gekennzeichnet, dass** ein Stromversorgungsmodul (100) zur Stromversorgung der elektrischen Luftpumpe auf der Oberseite des Innenrohrs an einem oberen Ende der oberen Schale angeordnet ist, das Stromversorgungsmodul eine Batterie und eine Leiterplatte umfasst und das Stromversorgungsmodul über Drähte elektrisch mit der elektrischen Luftpumpe im Innenrohr verbunden ist.

7. Elektrisch betriebener Regenschirm nach Anspruch 6, **dadurch gekennzeichnet, dass** die Batterie eine wiederaufladbare Solarbatterie ist und das Leistungsmodul mit einem Solarpanel (100) zum Laden der wiederaufladbaren Batterie ausgestattet ist.

8. Elektrisch betriebener Regenschirm nach Anspruch 6, **dadurch gekennzeichnet, dass** die Leiterplatte eine drahtlose Steuerschaltung ist, der Regenschirm unter Verwendung einer drahtlosen Vorrichtung auf- oder zusammengeklappt wird und die drahtlose Vorrichtung eine Fernbedienung, ein Bluetooth-Mobiltelefon usw. umfasst, aber nicht darauf beschränkt ist.

9. Elektrisch betriebener Regenschirm nach Anspruch 6, **dadurch gekennzeichnet, dass** die untere Schale abnehmbar mit dem Außenrohr verbunden ist und um das Außenrohr herumgeführt ist.

## Revendications

1. Parapluie à commande électrique comprenant
une colonne (1) ;
un plateau supérieur (2)
un plateau inférieur (3) ;
une pluralité de tiges longues (4), chacune ayant une partie centrale et une partie supérieure chacune reliée de manière rotative au plateau supérieur ;
plusieurs tiges courtes (5) ayant deux extrémités ; et
une pompe à air électrique (6) ;
dans lequel
une extrémité de chaque tige courte est reliée de manière rotative au plateau inférieur, l'autre extrémité de chaque tige courte est reliée de manière rotative à la partie centrale ou à la partie supérieure de la tige longue correspondante ;
la colonne comprend un tube intérieur (11) ayant un haut et un bas, et un tube extérieur (12) ayant un haut, un bas et une partie inférieure, le tube extérieur est manchonné autour du tube intérieur, le tube intérieur est capable de glisser vers le haut et vers le bas par rapport au tube extérieur dans une gamme limitée de mouvements ;
une chambre à air fermée (A) est définie entre le bas du tube intérieur et le bas ou la partie inférieure du tube extérieur ;
le plateau supérieur est relié à la partie supérieure du tube intérieur, le plateau inférieur est relié au tube extérieur et manchonné autour du tube extérieur ;
le plateau supérieur est capable de glisser de haut en bas avec le tube intérieur par rapport au tube extérieur et au plateau inférieur, de manière à entraîner la rotation de la pluralité de tiges longues et de la pluralité de tiges courtes afin de plier ou de déplier le parapluie,
**caractérisé par le fait que** la pompe à air électrique est disposée à l'intérieur du tube intérieur pour gonfler ou dégonfler la chambre à air de manière à faire glisser le tube intérieur vers le haut et vers le bas.

2. Le parapluie à commande électrique selon la revendication 1, **caractérisé en ce qu'**un piston (9) mobile avec le tube intérieur est disposé au fond du tube intérieur, un bouchon de tube (8) est disposé au fond du tube extérieur ou à l'intérieur de la partie inférieure du tube extérieur, la chambre d'air fermée à l'intérieur du tube extérieur est définie entre le piston et le bouchon de tube ;
la pompe à air électrique est située au-dessus du piston, la pompe à air électrique a une buse d'air (61) située au bas de la pompe à air électrique, la buse d'air s'étend vers le bas à travers le piston et communique avec la chambre d'air ;
lorsque le cadre du parapluie est entièrement déplié, la pompe à air électrique évacue l'air à l'intérieur de la chambre à air, le piston se déplace vers le bas avec le tube intérieur par rapport au tube extérieur pour résister contre le bouchon du tube afin de maintenir le cadre du parapluie déplié, et la chambre à air est une zone tampon pour une force extérieure.

3. Le parapluie à commande électrique selon la revendication 2, **caractérisé par le fait que** le piston est relié de manière amovible au fond du tube intérieur et que le bouchon du tube est relié de manière amovible au tube extérieur.

4. Le parapluie à commande électrique selon la revendication 3, **caractérisé en ce que** le piston a un trou de passage vertical (93) à une partie centrale du piston pour permettre à la buse d'air de passer à travers, le piston a un ou plusieurs trous de connexion radiaux (91) sur une périphérie du piston, correspondant, le tube intérieur a un ou plusieurs trous filetés, le piston est connecté au tube intérieur par un boulon (71) passant à travers le trou fileté et le trou de connexion correspondant ;
le fond du piston sort du tube intérieur, et un premier joint d'étanchéité (92) est disposé entre une périphérie du fond du piston et une paroi intérieure du tube extérieur.

5. Le parapluie à commande électrique selon la revendication 4, **caractérisé par le fait que** le bouchon du tube a un ou plusieurs trous de connexion radiaux sur une périphérie d'une partie inférieure du bouchon du tube, de même, le tube extérieur a un ou plusieurs trous filetés ;
le bouchon est relié au tube extérieur par un boulon (72) traversant le trou fileté et le trou de connexion correspondant, et un second anneau d'étanchéité est disposé entre la périphérie d'une partie supérieure du bouchon et la paroi intérieure du tube extérieur.

6. Le parapluie à commande électrique selon l'une des revendications 1 à 5, **caractérisé par le fait qu'**un module d'alimentation (100) destiné à alimenter la pompe à air électrique est disposé sur le dessus de la chambre à air à une extrémité supérieure du plateau supérieur, le module d'alimentation comprend une batterie et une carte de circuits imprimés, et le module d'alimentation est relié électriquement à la pompe à air électrique dans la chambre à air par des fils.

7. Le parapluie à commande électrique selon la revendication 6, **caractérisé par le fait que** la batterie est une batterie solaire rechargeable et que le module de puissance est équipé d'un panneau solaire (100) pour charger la batterie rechargeable.

8. Parapluie à commande électrique selon la revendication 6, **caractérisé par le fait que** la carte de circuit imprimé est un circuit de commande sans fil, que le parapluie est déplié ou replié à l'aide d'un dispositif sans fil et que le dispositif sans fil comprend, sans s'y limiter, une télécommande, un téléphone mobile Bluetooth, etc.

9. Le parapluie à commande électrique selon la revendication 6, **caractérisé par le fait que** le plateau inférieur est relié de manière amovible au tube extérieur et entouré d'une gaine autour du tube extérieur.
